# EUROPEAN PATENT SPECIFICATION

(11) **EP 1 253 785 B1**
(45) Date of publication and mention of the grant of the patent: **07.07.2010**
(21) Application number: 02252726.1
(22) Date of filing: 17.04.2002
(51) Int. Cl.: H04N 7/01, H04N 5/44

(54) **Increasing the standard of a raster-scanned video signal, and interlace-to-sequential conversion**
Verbesserung des Standards eines durch Rasterabtastung erzeugten Videosignals und Zeilensprung zur sequentiellen Abtastumsetzung
Amélioration du standard d'un signal vidéo obtenu par balayage de trames et conversion d'un balayage entrelacé en un balayage séquentiel

(30) Priority: 26.04.2001 GB 0110292
(43) Date of publication of application: 30.10.2002
(73) Proprietor: BRITISH BROADCASTING CORPORATION, London W1A 1AA (GB)
(72) Inventor: Easterbrook, James Edward, B.B.C., Tadworth, Surrey, KT20 6NP (GB)
(74) Representative: Abnett, Richard Charles

(56) References cited:
- EP-A- 0 702 488
- WO-A-94/15435

## Description

### Background of the Invention

This invention relates to a method of and apparatus for increasing the standard of a raster-scanned video signal, and particularly though not exclusively to a method of and apparatus for converting from interlaced scan to sequential scan format. Sequential scan format is also known as a non-interlaced scan or as a progressive scan.

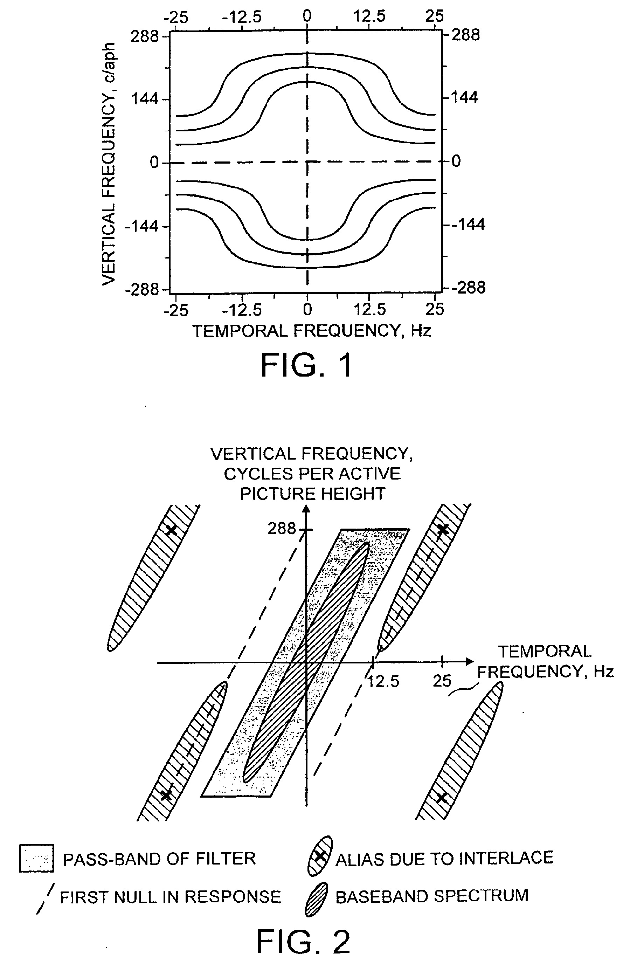

A well-known method of interlace-to-sequential conversion is to use a fixed vertical-temporal (2-dimensional) transversal filter. An example of this is seen in United States Patent US-A-4,789,893 (Weston) where the filter has a frequency response which is similar to that shown in Figure 1 (this figure is not in the patent but is in the Thomas papers, see below). Figure 1 is a 'topographical' view illustrating the response for a range of temporal frequencies ±25Hz and a range of vertical frequencies ±288 cycles per active picture height (c/aph). A video standard of 576 lines per active picture and 25 interlaced pictures per second is assumed in these figures. In Figure 1 it is seen that there is a peak or pass band centred on zero frequency, i.e. 0 c/aph, 0Hz, and a stop band centred on ±288 c/aph, ±25Hz, this thus appearing at each of the four corners. We have appreciated that the action of the filter is thus essentially to separate the spectrum into two regions, namely signal (pass band) and alias (stop band). The alias is not wanted.

All fixed filters of this type have the disadvantage that there will always be some picture material for which they are inappropriate and do not work properly. In the case of the filter illustrated in Figure 1, for example, a stationary scene with a lot of vertical detail may have energy at (±288 c/aph, 0Hz) which will be removed, causing a loss of vertical definition.

Other filtering methods are reviewed by Thomas, G.A. in "A comparison of motion-compensated interlace-to-progressive conversion methods", BBC Research Department Report No. 1996/9, an expanded version of which is published in Image Communication, No. 12, 1998, pages 209 to 229.

One approach to overcoming the problem with fixed filters has been to use adaptive filters which provide motion compensation. Motion compensation attempts to cure the problem by, in effect, displacing adjacent fields of the image sequence to make a stationary scene. As described by Thomas, a purely temporal filter can then be used to recover the full vertical resolution of the image. Another way of considering this motion-compensated filtering is to say that the response of the filter is skewed to match the skewed spectrum of a moving object. This is illustrated in Figure 2 which is taken from the above-mentioned Image Communication paper, and which shows the signal and alias spectra and the ideal filter response for a vertical speed of 0.5 picture lines per field period. For a more detailed description reference should be made to the Image Communication paper.

Space-time/frequency domain transformations, that is space-time domain to/from frequency domain transforms, such as the Fourier transform, have in recent years come to be used in broadcasting, particularly in the OFDM (orthogonal frequency-division multiplex) system proposed for use in DAB (digital audio broadcasting) and DVB-T (digital video broadcasting - terrestrial). Phase correlation motion estimation also uses Fourier transforms, though not in the signal path. Two-dimensional filtering of still images in the Fourier domain is discussed in "An introduction to digital image processing" by Wayne Niblack, Prentice-Hall, 1986, ISBN 0-13-480674-3, Sections 4.2 to 4.4, pages 103 to 112.

European Patent Specification EP 702488 A describes digital TV format conversion in which a source raster-scanned image consisting of two interlaced frames is divided into N frequency sub-bands. High and low frequency filtering is then applied which generates spatial information (low frequency) and temporal signals (high frequency), which represent the structure of the image and its position in the inter-frame time. Re-composition of the frequency spectrum of the source image is achieved by frequency processing to give a reformed frequency spectrum with an image in progressive (sequential) format. Movement estimation is also described.

In particular, it discloses receiving an input signal at a sampling structure in accordance with an input standard, the input signal being a raster-scanned signal with a plurality of lines arranged in a plurality of successive fields; subjecting the received input signal to a first three-dimensional space-time/frequency domain transformation to produce a transformed signal containing a plurality of components each having a value; processing the components in the transformed signal in dependence upon the signal component values to produce a filtered signal; and subjecting the filtered signal to a second three-dimensional space-time/frequency domain transformation which is substantially the inverse of the first transformation to provide at least the additional signal values required to increase the input signal to the output standard.

United States Patent US-A-6,124,893 (Stapleton) describes a scan conversion method which it states can be used for interlaced to sequential format and can be justified by Fourier analysis.

Space-time/frequency transforms have been proposed for decoding composite video signals, see for example United States Patent US-A-5,621,477 (Demmer) which describes the use of a Hadamard transform, or alternatively a Fourier transform, for decoding a composite video signal.

Finally, United Kingdom Patent Specification GB-A-2 243 514 (Weston) describes generating interlaced video signals by interpolation, United States Patent US-A-5,845,015 (Martucci) describes a method of resizing an image using the discrete cosine transform (DCT) using the convolution-multiplication properties of the DCT applied to non-overlapping blocks of the image, and International Patent Application WO 01/24532 A1 (Azadegan et al) describes DCT domain conversion of a video signal to a lower definition signal by replacing an identity matrix with a diagonal matrix in a DCT domain.

### Summary of the Invention

The invention in its various aspects is defined in the independent claims below to which reference may now be made. Advantageous features are set forth in the appendant claims.

A preferred embodiment of the invention is described below with reference to the drawings. This embodiment takes the form of an interlace-to-sequential video standards converter which receives an interlaced raster-scanned input signal at an input standard. A deinterlacer inserts zero values into the signal so as to increase the standard to a required output standard. The output standard signal is formed into data blocks which in turn are subjected to a Fourier transformation to produce a transformed signal containing a plurality of components each having a value. The components of the transformed signal are assigned as signal or alias components, the assignment being made in dependence upon the component values. The component values which are assigned as signal components are then subjected to an inverse Fourier transformation to provide at least the additional signal values required to increase the input signal to the output standard. Other types of up-conversion are possible, such as increasing the line standard of an existing sequential signal.

In the preferred embodiment, the assignment operation proceeds by a cyclic process of growing signal and alias regions. As the assigner assigns a component as 'signal', it assigns that component's alias as 'alias'. Initially the assigner assigns the "zero frequency" component (or a region around it) to 'signal' and the alias of that component (or region) to 'alias'. The 'signal' region is grown by considering all unassigned neighbour components and adding the one with greater magnitude. Its alias is added to the 'alias' region. Any component which is its own alias is assigned to a special 'border' class.

When all samples have been assigned, those in the 'alias' region are set to zero, those in the 'border' class are attenuated by a factor of two, and those in the 'signal' region are not modified.

### Brief Description of the Drawings

The invention will now be described in more detail by way of example with reference to the accompanying drawings, in which:
Figure 1 (referred to above) is a diagram showing the frequency response of a known fixed filter used in scan conversion;
**Figure 2** (referred to above) is a spectrum diagram showing the signal and alias spectra and the ideal filter response for a known filter with motion compensation;
**Figure 3** is a block diagram of an interlace-to-sequential converter embodying the present invention; and
**Figure 4** is a flow chart illustrating the component assignment procedure used in the transform domain filter in the interlace-to-sequential converter of Figure 3.

### Detailed Description of the Preferred Embodiment

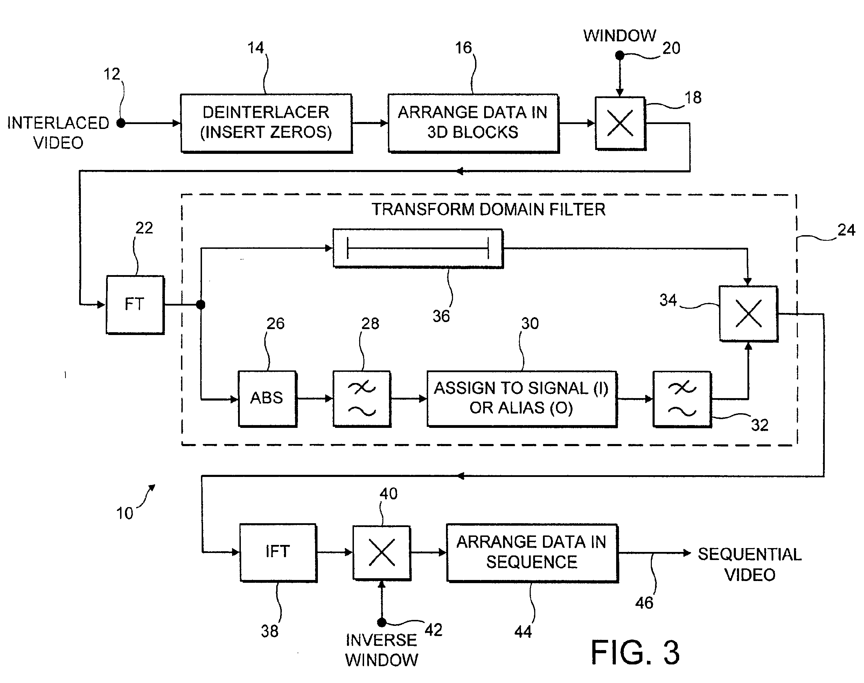

The preferred embodiment of the invention will now be described with reference to Figure 3, which is a block diagram of an interlace-to-sequential converter embodying the invention. The interlace-to-sequential converter may be used with video signals in any of a number of ways, for example in television studio equipment, for signal processing at a broadcast transmitter, or with a video display, for example a flat panel display such as a plasma display device. The converter could also, for example, be used to produce a relatively high quality still picture from one instant of a video signal, for example the converter could be produced in the form of an expansion card for a personal computer.

Referring to Figure 3, the interlace-to-sequential converter 10 illustrated is seen to have an input 12 for receiving an interlaced video input signal which is a raster-scanned signal at an input standard, that is having a predetermined number of lines arranged in each of a plurality of successive interlaced fields. Connected to the input 12 is a deinterlacer or inserter 14 which converts the input signal into a signal at the required output standard by simply inserting zeros into the signal at those points which are present in the output standard but not in the input standard. That is, the deinterlacer 14 in this embodiment inserts a line of zeros between each pair of input lines. The signal now has the form of a sequential (or progressive) signal but with alternate lines consisting solely of zeros.

From the deinterlacer 14 the signal passes to a data arranger 16 which arranges the data into blocks. These blocks are three dimensional, that is they may consist of 32 samples by 32 lines by 8 fields. The blocks may, and indeed preferably do overlap. Block sizes of 4-128 samples by 4-128 lines by 2-32 fields may be considered; with 8 fields a minimum block size of 16 by 16 is preferred and 64 by 64 is better. The overlap is preferably complete, in that the blocks are spaced at 50% of the block size. The output of the data arranger 16 is applied to a circuit 18 where the blocks are successively multiplied by a windowing function, which is any suitable symmetric function allowing a cross-fade from one block to the next so as to avoid sharp transitions at the block edges. The windowing function is applied via an input 20.

The blocks are now applied to a Fourier transform circuit 22, conveniently implemented as a fast Fourier transform or FFT. As is well-known the FFT effects a space-time/frequency transformation from the space-time domain to the frequency domain. After the Fourier transformation, the signal now consists of successive three-dimensional blocks of frequencies, which can be considered rather like a three-dimensional version of Figure 1.

The thus-transformed signal is now applied to a transform domain filter 24 which filters the block of frequency components so as to attenuate selected ones of the components in dependence upon the component values. This is achieved by allocating each component of the transformed signal either as a signal (wanted) component or as an alias (unwanted) component.

For this purpose the transform domain filter 24 is constructed as follows. The FFT produces a complex output from its real input, and so to the output of the FFT 22 is connected an absolute value circuit 26 which takes the modulus of the complex signal applied to it, i.e. the square root of the sum of the squares of the real and imaginary components. The output of the absolute value circuit is applied, through an optional 'hole-filling' filter 28, to an assigning circuit or assigner 30. This assigns each component either as a signal component or as an alias component in a manner described below. The output of the assigning circuit will be a one or a zero for each input component indicating whether that component is respectively a signal component or an alias component, except for some 'border' components which may take the value of a half (see below). It will be remembered that the components are here frequency components due to the action of the transform circuit 22. The output of the assigning circuit is applied through another optional 'smoothing' filter 32 to one input of a multiplier 34. Either or both of the filters 28,32 can be omitted.

The other input of the multiplier 34 receives the signal components themselves from the Fourier transform circuit 22, subject to delay in a compensating delay 36 to compensate for the total delay in the elements 26 to 32, so that the frequency component value and the indication of whether it is signal or alias are co-timed at the multiplier 34. The multiplier 34 will thus pass those components which are signal components, and attenuate the frequency components which are identified as alias components.

After the transform domain filter the signal is processed back to its proper format. The signal from the multiplier 34 in the transform domain filter 24 is first applied to an inverse Fourier transform (IFT) circuit 38. This subjects the component values to a second space-time/frequency domain transformation which is the inverse of that applied by the Fourier transform circuit 22. The circuit 38 may take the form of an inverse fast Fourier transform (IFFT). In fact it is immaterial as to which of the circuits 22 and 38 is the inverse Fourier transform circuit and which is the (forward) Fourier transform circuit; they may be the other way round from that shown. All that matters is that one executes the inverse of the other.

The output of the IFT circuit 38 is applied to an inverse windowing circuit 40 which receives a windowing function at an input 42 is the inverse of the windowing function at input 20. The windowing circuit 40 provides for cross-fading between blocks.

Finally the output of circuit 40 is applied to a data arranger 44 which takes the blockwise information which has been generated by the IFT circuit 38 and places it in proper sequence for a raster-scanned output signal. In this case that is a sequential signal.

Thus the interlaced signal received at input 12 has been up-converted to a sequential signal at the output 46.

Considering the assignment operation, to convert an interlaced signal to sequential format the transform domain filter operates to attenuate those parts of the spectrum that contain aliases of the signal while retaining those parts that contain the signal itself. This can be considered as dividing, or segmenting, the 3-D transform domain into two equal-sized regions, one centred on (0 c/aph, 0Hz) and the other centred on
(±288 c/aph, ±25Hz). In summary, in the preferred embodiment this is done by a region growing process. Starting at (0 c/aph, 0Hz) the largest magnitude adjacent sample is selected and assigned or allocated to the 'signal' region, and its alias is allocated to the unwanted or 'alias' region. When all the samples have been assigned, those in the 'alias' region are set to zero before the inverse transform is computed.

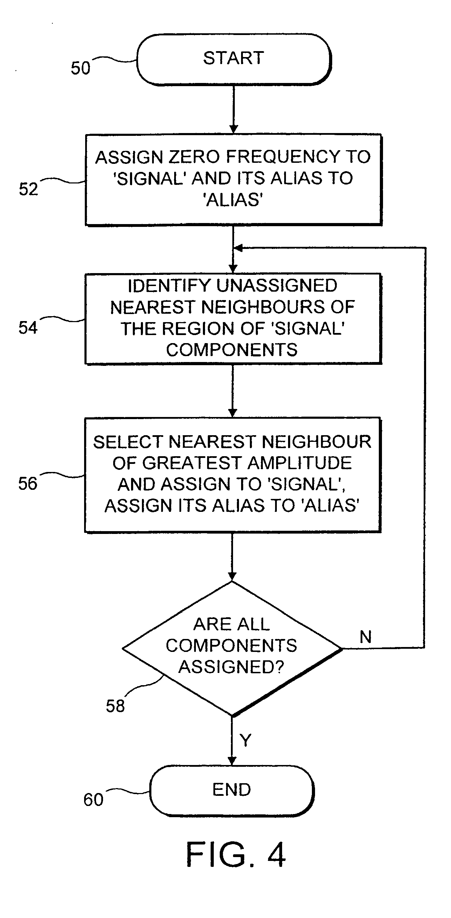

The manner in which the assigning circuit 30 operates to achieve this will now be described. In practice the circuit will generally be implemented in software. The procedure is illustrated in the flowchart of Figure 4.

For each data block the procedure starts at 50 and passes to step 52 where the zero or centre frequency of the block is first assigned as 'signal'. Each component in the block has a respective alias component. In the case of interlace to sequential conversion, the alias component is the component in the block which is offset from the signal component by 288 c/aph, 25Hz, that is (½L, ½F) where the block contains ±L lines and ±F fields. In step 52 the alias of the zero frequency is assigned as 'alias', that is an unwanted component.

The procedure now passes to step 54, in which the nearest neighbours of the zero frequency, which has been assigned as 'signal', are identified. There are 26 of these at this stage. The procedure now passes to step 56, in which these 26 nearest neighbours are tested and the one which has the greatest amplitude is selected. This nearest neighbour is now also assigned as 'signal', and its alias is assigned as 'alias'.

The procedure now passes to step 56 where a test is made to see whether all the components have been assigned. Here clearly they have not, and the procedure re-circulates to step 54.

In step 54 the components which have been assigned as 'signal' will form a unitary region, and the nearest neighbours of this region are identified. In practice this simply means that the nearest neighbour which was identified as 'signal' on the previous cycle is replaced by its unassigned nearest neighbours. The number of such neighbours will change as the 'signal' region changes shape. In step 56 a selection of the largest of this group of neighbours is made and this is also assigned as 'signal', and its alias is assigned as 'alias'. This cycle continues with the region of 'signal' components growing adaptively on each cycle. The way it grows depends on the relative amplitudes of the components and is thus signal-dependent.

The assignation of 'signal' or 'alias' to a component, in fact, means storing a 1 or a 0 respectively in relation to that component. Alias component values will then be completely attenuated, viz. reduced to zero, in the multiplier 34.

The point will come when the region of 'signal' components starts to meet the region of 'alias' components, and the number of unassigned components in the nearest neighbours group will start to reduce. Eventually all the components will have been allocated, and the output of step 58 will be YES, and the procedure ends at step 60.

It should be noted that the 'alias' components will also form a unitary region in infinite three-dimensional space, but it will not look like that due to the finite size of the data block.

Depending on the precise size of each data block, there may be components which are exactly half-way between the centre and the corners of the block. These points are their own alias and need special treatment. They are assigned a value of 0.5 (one half). This is done so that the overall filtering function of the transform domain filter is that of a Nyquist filter, and this is desirable because that ensures that all the original input lines are left unmodified. This 0.5 assignment, when necessary, requires an extra step (not shown) in the flowchart of Figure 4.

The region-growing process described with reference to Figure 4 automatically adjusts to the skewed spectrum of a moving object, such as shown in Figure 2. It should, therefore, recover the maximum available resolution, or something relatively close to it.

Minor modifications may be made to the procedure described, for example as follows.

To speed up the processing, the assumption can be made that there is a central region, not just the single central component, which will always be 'signal'. The shape of this component can be determined empirically by evaluating a large number of samples of the type of signal to be processed.

The amplitudes which are stored for the nearest neighbours may be subject to a prefiltering operation prior to the selection of the largest value. That is, each component value may be replaced by a weighted average of that value with a contribution from each of the surrounding values. This smoothes out the values used in the region-growing operation.

As shown, the selected 'signal' components are all used at equal magnitude and the 'alias' components are all discarded. This has the effect of a "sharp cut" filter which may produce undesirable "ringing" in the output image. This effect may be reduced by use of the optional smoothing filter 32 to apply a suitable transition shape to the control signal input to the multiplier 34.

The method described divides the frequency components into two equal-sized regions, the 'signal' region and the 'alias' region respectively, which produces a Nyquist filter. In some circumstances it may be preferred to have an unequal division, e.g. to "soften" the output image by reducing the size of the 'signal' region. This may be achieved by giving filter 32 a non-linear function, such as a rank-order filter that selects the minimum value from those surrounding the value under consideration.

If the system is operating correctly, the output signal will comprise the lines of the input signal together with an equal number of new lines in between the old, input lines. The old, input lines should be unchanged. Thus it would be possible to take only the new lines produced by the method and to combine them with the original signal to form an output signal, the lines which are generated by the method and which correspond to input lines being discarded.

As described above, the deinterlacer 14 inserts a line of zeros between each pair of input lines. It would, in principle, be possible to use any constant value for the inserted lines, but the sequential video output will then have a constant offset, which would need to be subtracted. There could, however, be an advantage in choosing an offset value that minimises the amplitude of the 'zero frequency' sample in Fourier space.

The particular type of filtering described, namely the region-growing procedure, is found to give subjectively good results.

Figure 3 is shown as a hardware diagram with the components shown as hardware components, but the converter may, in practice, be largely or fully implemented in software. In this case Figure 3 should be regarded as more in the nature of a flowchart.

The preferred and illustrated embodiment of the invention uses a region-growing process. However, this may not be the only practical way of assigning the components as signal or alias, and another assignment method could be employed.

In the embodiment described an interlace-to-sequential scan conversion is provided. The invention is, however, applicable to other forms of upconversion, for example, upconverting a sequential signal to a higher standard with an increased number of lines per field. Another example of its use might be in field rate up-conversion, for example from 50 Hz to 100 Hz.

## Claims

1. A method of up-converting a video signal, comprising the steps of:
receiving an input signal at a sampling structure in accordance with an input standard, the input signal being a raster-scanned signal with a plurality of lines arranged in a plurality of successive fields;
inserting predetermined values into the received input signal so as to increase the number of lines and/or fields to a required output standard and generate an output standard signal;
subjecting the output standard signal to a first three-dimensional space-time/frequency domain transformation to produce a transformed signal containing a plurality of components each having a value;
assigning the components of the transformed signal as signal or alias components, the assignment being made in dependence upon the component values, to produce a plurality of assigned components; and
subjecting the component values which are assigned as signal components to a second three-dimensional space-time/frequency domain transformation which is substantially the inverse of the first transformation to provide at least the additional signal values required to increase the input signal to the output standard.

2. A method according to claim 1, in which the predetermined values are zero values.

3. A method according to claim 1 or 2, in which the assignment step comprises a cyclic process of growing signal and alias regions.

4. A method according to claim 3, in which as a component is assigned as 'signal', its alias is assigned as 'alias'.

5. A method according to claim 4, modified in that a component which is its own alias is set to a predetermined value, particularly of weight ½.

6. A method according to any of claims 3 to 5, in which initially a central region is assigned as 'signal'.

7. A method according to any of claims 1 to 6, in which after a component has been assigned as 'signal', its neighbour of greatest value is then assigned as 'signal'.

8. A method according to any of claims 1 to 7, in which the transformation steps are conducted blockwise on the data in the output standard signal.

9. A method according to claim 8, in which the blocks overlap.

10. A method according to claim 9, further comprising the step of cross-fading between adjacent blocks.

11. A method according to any of claims 1 to 10, in which the transformations comprise a Fourier transform and an inverse Fourier transform.

12. A method according to any of claims 1 to 11, in which the input standard is an interlaced standard and the output standard is a sequential (progressive) standard.

13. Apparatus for up-converting a video signal, comprising:
an input (12) for receiving an input signal at a sampling structure in accordance with an input standard, the input signal being a raster-scanned signal with a plurality of lines arranged in a plurality of successive fields;
an inserter (14) for inserting predetermined values into the received input signal so as to increase the number of lines and/or fields to a required output standard and generate an output standard signal;
a first transform means (22) for subjecting the output standard signal to a first three-dimensional space-time/frequency domain transformation to produce a transformed signal containing a plurality of components each having a value;
an assigner (30) for assigning the components of the transformed signal as signal or alias components, the assignment being made in dependence upon the component values, to produce a plurality of assigned components; and
a second transform means (38) for subjecting the component values which.are assigned as signal components to a second three-dimensional space-time/frequency domain transformation which is substantially the inverse of the first transformation to provide at least the additional signal values required to increase the input signal to the output standard.

14. Apparatus according to claim 13, in which the predetermined values are zero values.

15. Apparatus according to claim 13 or 14, in which the assigner (30) operates by a cyclic process of growing signal and alias regions.

16. Apparatus according to claim 15, in which as the assigner (30) assigns a component as 'signal', it assigns its alias as 'alias'.

17. Apparatus according to claim 16, modified in that the assigner sets a component which is its own alias to a predetermined value, particularly of weight ½.

18. Apparatus according to any of claims 15 to 17, in which initially the assigner assigns a central region as 'signal'.

19. Apparatus according to any of claims 13 to 18, in which after the assigner assigns a component as 'signal', it then assigns its neighbour of greatest value as 'signal'.

20. Apparatus according to any of claims 13 to 19, in which the first and second transform means (22,38) operate blockwise on the data in the output standard signal.

21. Apparatus according to claim 20, in which the blocks overlap.

22. Apparatus according to claim 21, further comprising means for cross-fading between adjacent blocks.

23. Apparatus according to any of claims 13 to 22, in which the first and second transform means (22,38) comprise a Fourier transform and an inverse Fourier transform.

24. Apparatus according to any of claims 13 to 23, in which the input standard is an interlaced standard and the output standard is a sequential (progressive) standard.

25. A video display device provided with apparatus in accordance with any of claims 13 to 24.

26. An expansion card for a personal computer, the expansion card carrying apparatus in accordance with any of claims 13 to 24.

## Patentansprüche

1. Verfahren zum Aufwärtsumsetzen eines Videosignals, wobei das Verfahren die folgenden Schritte umfasst:
Empfangen eines Eingangssignals an einer Abtaststruktur entsprechend einem Eingangsstandard, wobei das Eingangssignal ein rasterabgetastetes Signal mit mehreren Zeilen ist, die in mehreren aufeinanderfolgenden Feldern angeordnet sind,
Einfügen von vorbestimmten Werten in das empfangene Eingangssignal, um so die Zahl der Zeilen und/oder Felder auf einen erforderlichen Ausgangsstandard zu steigern und ein Ausgangsstandardsignal zu erzeugen,
Unterwerfen des Ausgangsstandardsignals einer ersten dreidimensionalen Raum-Zeit-/Frequenzebenenumformung, um ein umgeformtes Signal zu erzeugen, das mehrere Bestandteile enthält, die jeweils einen Wert haben,
Markieren der Bestandteile des umgeformten Signals als Signal- oder Aliasbestandteile, wobei die Markierung in Abhängigkeit von den Bestandteilwerten vorgenommen wird, um mehrere markierte Bestandteile zu erzeugen, und
Unterwerfen der Bestandteilwerte, die als Signalbestandteile markiert sind, einer zweiten dreidimensionalen Raum-Zeit-/Frequenzebenenumformung, die im Wesentlichen die Umkehrung der ersten Umformung ist, um wenigstens die zusätzlichen Signalwerte bereitzustellen, die erforderlich sind, um das Eingangssignal auf den Ausgangsstandard zu steigern.

2. Verfahren nach Anspruch 1, wobei die vorbestimmten Werte Nullwerte sind.

3. Verfahren nach Anspruch 1 oder 2, wobei der Markierungsschritt einen zyklischen Vorgang des Aufbauens von Signal- und Aliasbereichen umfasst.

4. Verfahren nach Anspruch 3, wobei, wenn ein Bestandteil als "Signal" markiert wird, sein Alias als "Alias" markiert wird.

5. Verfahren nach Anspruch 4, modifiziert darin, dass ein Bestandteil, der sein eigener Alias ist, auf einen vorbestimmten Wert gesetzt wird, insbesondere mit ½ Wertigkeit.

6. Verfahren nach einem der Ansprüche 3 bis 5, wobei anfangs ein mittlerer Bereich als "Signal" markiert wird.

7. Verfahren nach einem der Ansprüche 1 bis 6, wobei, nachdem ein Bestandteil als "Signal" markiert worden ist, sein Nachbar mit dem größten Wert danach als "Signal" markiert wird.

8. Verfahren nach einem der Ansprüche 1 bis 7, wobei die Umformungsschritte blockweise an den Daten in dem Ausgangsstandardsignal ausgeführt werden.

9. Verfahren nach Anspruch 8, wobei sich die Blöcke überlappen.

10. Verfahren nach Anspruch 9, das ferner den Schritt des Überblendens zwischen aneinandergrenzenden Blöcken umfasst.

11. Verfahren nach einem der Ansprüche 1 bis 10, wobei die Umformungen eine Fourier-Transformation und eine umgekehrte Fourier-Transformation umfassen.

12. Verfahren nach einem der Ansprüche 1 bis 11, wobei der Eingangsstandard ein Zeilensprungstandard ist und der Ausgangsstandard ein sequentieller (Vollbild-) Standard ist.

13. Vorrichtung zum Aufwärtsumsetzen eines Videosignals, die Folgendes umfasst:
einen Eingang (12) zum Empfangen eines Eingangssignals an einer Abtaststruktur entsprechend einem Eingangsstandard, wobei das Eingangssignal ein rasterabgetastetes Signal mit mehreren Zeilen ist, die in mehreren aufeinanderfolgenden Feldern angeordnet sind,
eine Einfügevorrichtung (14) zum Einfügen von vorbestimmten Werten in das empfangene Eingangssignal, um so die Zahl der Zeilen und/oder Felder auf einen erforderlichen Ausgangsstandard zu steigern und ein Ausgangsstandardsignal zu erzeugen,
ein erstes Umformmittel (22) zum Unterwerfen des Ausgangsstandardsignals einer ersten dreidimensionalen Raum-Zeit-/Frequenzebenenumformung, um ein umgeformtes Signal zu erzeugen, das mehrere Bestandteile enthält, die jeweils einen Wert haben,
eine Markiervorrichtung (30) zum Markieren der Bestandteile des umgeformten Signals als Signal- oder Aliasbestandteile, wobei die Markierung in Abhängigkeit von den Bestandteilwerten vorgenommen wird, um mehrere markierte Bestandteile zu erzeugen, und
ein zweites Umformmittel (38) zum Unterwerfen der Bestandteilwerte, die als Signalbestandteile markiert sind, einer zweiten dreidimensionalen Raum-Zeit-/Frequenzebenenumformung, die im Wesentlichen die Umkehrung der ersten Umformung ist, um wenigstens die zusätzlichen Signalwerte bereitzustellen, die erforderlich sind, um das Eingangssignal auf den Ausgangsstandard zu steigern.

14. Vorrichtung nach Anspruch 13, wobei die vorbestimmten Werte Nullwerte sind.

15. Vorrichtung nach Anspruch 13 oder 14, wobei die Markiervorrichtung (30) durch einen zyklischen Vorgang des Aufbauens von Signal- und Aliasbereichen arbeitet.

16. Vorrichtung nach Anspruch 15, wobei, wenn die Markiervorrichtung (30) einen Bestandteil als "Signal" markiert, sie seinen Alias als "Alias" markiert.

17. Vorrichtung nach Anspruch 16, modifiziert darin, dass die Markiervorrichtung einen Bestandteil, der sein eigener Alias ist, auf einen vorbestimmten Wert setzt, insbesondere mit ½ Wertigkeit.

18. Vorrichtung nach einem der Ansprüche 15 bis 17, wobei anfangs die Markiervorrichtung einen mittleren Bereich als "Signal" markiert.

19. Vorrichtung nach einem der Ansprüche 13 bis 18, wobei die Markiervorrichtung, nachdem sie einen Bestandteil als "Signal" markiert, seinen Nachbarn mit dem größten Wert danach als "Signal" markiert.

20. Vorrichtung nach einem der Ansprüche 13 bis 19, wobei das erste und das zweite Umformmittel (22, 38) blockweise an den Daten in dem Ausgangsstandardsignal arbeiten.

21. Vorrichtung nach Anspruch 20, wobei sich die Blöcke überlappen.

22. Vorrichtung nach Anspruch 21, das ferner Mittel zum Überblenden zwischen aneinandergrenzenden Blöcken umfasst.

23. Vorrichtung nach einem der Ansprüche 13 bis 22, wobei das erste und das zweite Umformmittel (22, 38) eine Fourier-Transformation und eine umgekehrte Fourier-Transformation umfassen.

24. Vorrichtung nach einem der Ansprüche 13 bis 23, wobei der Eingangsstandard ein Zeilensprungstandard ist und der Ausgangsstandard ein sequentieller (Vollbild-) Standard ist.

25. Videoanzeigegerät, versehen mit einer Vorrichtung nach einem der Ansprüche 13 bis 24.

26. Erweiterungskarte für einen Arbeitsplatzrechner, wobei die Erweiterungskarte eine Vorrichtung nach einem der Ansprüche 13 bis 24 trägt.

## Revendications

1. Procédé de conversion ascendante d'un signal vidéo comprenant les étapes consistant à :
recevoir un signal d'entrée au niveau d'une structure d'échantillonnage conformément à une norme d'entrée, le signal d'entrée étant un signal analysé par balayage d'exploration avec une pluralité de lignes agencées en une pluralité de champs successifs ;
insérer des valeurs prédéterminées dans le signal d'entrée reçu afin d'augmenter le nombre de lignes et/ou de champs à une norme de sortie requise et générer un signal de sortie standard ;
soumettre le signal de sortie standard à une première transformation tridimensionnelle de domaine espace-temps/fréquence pour produire un signal transformé contenant une pluralité de composantes ayant chacune une valeur ;
assigner les composantes du signal transformé comme composantes de signal ou de repli de spectre, l'assignation étant effectuée en fonction des valeurs des composantes, pour produire une pluralité de composantes assignées ; et
soumettre les valeurs des composantes qui sont assignées comme composantes de signal à une deuxième transformation tridimensionnelle de domaine espace-temps/fréquence qui est sensiblement l'inverse de la première transformation afin de produire au moins les valeurs de signal supplémentaires nécessaires pour augmenter le signal d'entrée à la norme de sortie.

2. Procédé selon la revendication 1, dans lequel les valeurs prédéterminées sont des valeurs nulles.

3. Procédé selon la revendication 1 ou 2, dans lequel l'étape d'assignation comprend un processus cyclique de croissance de régions de signal et de repli de spectre.

4. Procédé selon la revendication 3, dans lequel, comme une composante est assignée comme « signal », son repli de spectre est assigné comme « repli de spectre ».

5. Procédé selon la revendication 4, modifié en ce qu'une composante qui est son propre repli de spectre est définie à une valeur prédéterminée, de poids ½ en particulier.

6. Procédé selon l'une quelconque des revendications 3 à 5, dans lequel une région centrale est initialement assignée comme « signal ».

7. Procédé selon l'une quelconque des revendications 1 à 6, dans lequel, après qu'une composante a été assignée comme « signal », sa voisine ayant la valeur la plus grande est ensuite assignée comme « signal ».

8. Procédé selon l'une quelconque des revendications 1 à 7, dans lequel les étapes de transformation sont réalisées par bloc sur les données dans le signal de sortie standard.

9. Procédé selon la revendication 8, dans lequel les blocs se chevauchent.

10. Procédé selon la revendication 9, comprenant en outre l'étape de fondu enchaîné entre des blocs adjacents.

11. Procédé selon l'une quelconque des revendications 1 à 10, dans lequel les transformations comprennent une transformée de Fourier et une transformée de Fourier inverse.

12. Procédé selon l'une quelconque des revendications 1 à 11, dans lequel la norme d'entrée est une norme entrelacée et la norme de sortie est une norme séquentielle (progressive).

13. Appareil de conversion ascendante de signal vidéo, comprenant :
une entrée (12) pour recevoir un signal d'entrée au niveau d'une structure d'échantillonnage conformément à une norme d'entrée, le signal d'entrée étant un signal analysé par balayage d'exploration avec une pluralité de lignes agencées en une pluralité de champs successifs ;
un dispositif d'insertion (14) pour insérer des valeurs prédéterminées dans le signal d'entrée reçu afin d'augmenter le nombre de lignes et/ou de champs à une norme de sortie requise et de générer un signal de sortie standard ;
un premier moyen de transformation (22) pour soumettre le signal de sortie standard à une première transformation tridimensionnelle de domaine espace-temps/fréquence pour produire un signal transformé contenant une pluralité de composantes ayant chacune une valeur ;
un dispositif d'assignation (30) pour assigner les composantes du signal transformé comme composantes de signal ou de repli de spectre, l'assignation étant effectuée en fonction des valeurs des composantes, pour produire une pluralité de composantes assignées ; et
un deuxième moyen de transformation (38) pour soumettre les valeurs de composantes qui sont assignées comme composantes de signal à une deuxième transformation tridimensionnelle de domaine espace-temps/fréquence qui est sensiblement l'inverse de la première transformation afin de produire au moins les valeurs de signal supplémentaires nécessaires pour augmenter le signal d'entrée à la norme de sortie.

14. Appareil selon la revendication 13, dans lequel les valeurs prédéterminées sont des valeurs nulles.

15. Appareil selon la revendication 13 ou 14, dans lequel le dispositif d'assignation (30) réalise un processus cyclique de croissance de régions de signal et de repli de spectre.

16. Appareil selon la revendication 15, dans lequel, comme le dispositif d'assignation (30) assigne une composante comme « signal », il assigne son repli de spectre comme « repli de spectre ».

17. Appareil selon la revendication 16, modifié en ce que le dispositif d'assignation définit une composante qui est son propre repli de spectre à une valeur prédéterminée, de poids ½ en particulier.

18. Appareil selon l'une quelconque des revendications 15 à 17, dans lequel le dispositif d'assignation assigne initialement une région centrale comme « signal ».

19. Appareil selon l'une quelconque des revendications 13 à 18, dans lequel, après que le dispositif d'assignation (30) assigne une composante comme « signal », il assigne ensuite sa voisine ayant la plus grande valeur comme « signal ».

20. Appareil selon l'une quelconque des revendications 13 à 19, dans lequel les premier et deuxième moyens de transformation (22,38) agissent par bloc sur les données dans le signal de sortie standard.

21. Appareil selon la revendication 20, dans lequel les blocs se chevauchent.

22. Appareil selon la revendication 21, comprenant en outre un moyen pour faire un fondu enchaîné entre blocs adjacents.

23. Appareil selon l'une quelconque des revendications 13 à 22, dans lequel les premier et deuxième moyens de transformation (22,38) comprennent une transformée de Fourier et une transformée de Fourier inverse.

24. Appareil selon l'une quelconque des revendications 13 à 23, dans lequel la norme d'entrée est une norme entrelacée et la norme de sortie est une norme séquentielle (progressive).

25. Dispositif d'affichage vidéo doté d'un appareil selon l'une quelconque des revendications 13 à 24.

26. Carte d'extension pour ordinateur personnel, ladite carte d'extension comportant l'appareil selon l'une quelconque des revendications 13 à 24.
